(19) Europäisches Patentamt / European Patent Office / Office européen des brevets

(11) **EP 2 302 343 B1**

(12) **EUROPÄISCHE PATENTSCHRIFT**

(45) Veröffentlichungstag und Bekanntmachung des Hinweises auf die Patenterteilung:
**24.08.2016 Patentblatt 2016/34**

(51) Int Cl.:
**G01N 25/02** (2006.01)          **A23G 1/56** (2006.01)
**G01K 1/20** (2006.01)

(21) Anmeldenummer: **09171276.0**

(22) Anmeldetag: **24.09.2009**

(54) **Vorrichtung und Verfahren zur Temperaturmessung**

Device and method for temperature measurement

Procédé et dispositif destinés à la mesure de la température

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**30.03.2011 Patentblatt 2011/13**

(73) Patentinhaber: **Bühler AG**
**9240 Uzwil (CH)**

(72) Erfinder:
• **Zeng, Yuantong**
**9240 Uzwil (DE)**
• **Braun, Peter**
**8280 Kreuzlingen (CH)**
• **König, René**
**8580 Amriswil (CH)**
• **Bobzin, Marcos**
**8125, Zollikerberg (CH)**

(74) Vertreter: **Hepp Wenger Ryffel AG**
**Friedtalweg 5**
**9500 Wil (CH)**

(56) Entgegenhaltungen:
**AU-B2- 685 896     US-A- 4 613 514**

• **WILTON I AND WODE G: "Quick and Simple Methods for Studying Crystallization Behavior of Fats" JOURNAL OF THE AMERICAN OIL CHEMISTS' SOCIETY, Bd. 40, Nr. 2, Dezember 1963 (1963-12), Seiten 707-711, XP002575736 Berlin / Heidelberg DOI: 10.1007/BF02609648**

**Beschreibung**

Die vorliegende Erfindung betrifft das Gebiet der Temperaturmessung, insbesondere der zeitabhängigen Temperaturmessung einer Masse mit den Merkmalen der Oberbegriffe der unabhängigen Ansprüche.

Aus dem Stand der Technik ist eine Analysemethode zur Bestimmung einer Erstarrungskurve, d.h. der Abkühlung, von Kakaobutter und anderen in Schokoladen und Confiseriewaren verwendeten Fetten bekannt, wobei diese Erstarrungskurve auch als Shukoff-Kühlkurve bezeichnet wird. Bei dieser Analysemethode wird eine bestimmte Menge flüssiger Kakaobutter in ein Gefäss gegeben, welches dann bis zu einer definierten Tiefe in ein Eis-Wasser-Gemisch von 0°C getaucht wird. Die Abkühlung der Kakaobutter findet unter genau festgelegten Bedingungen statt. Mittels eines Thermometers wird die Temperatur in regelmässigen Zeitintervallen abgelesen und aus den erhaltenen Werten die Zeit-Temperatur-Kurve erstellt. Als Gefäss wird eine doppelwandige Glasflasche verwendet, die zwischen der Doppelwandung auf einen Druck von 0.013 mbar evakuiert ist. Diese Analysemethode und die dazu zu verwendende Vorrichtung ist im Blatt 110/B/D-1985 des "Office International du Cacao, du Chocolat et de la Confiserie" offenbart.

Aus US 4,613,514 ist ebenfalls eine Apparatur zur Messung einer Kühlkurve bekannt. In einer inneren Glasröhre befindet sich geschmolzenes Fett, dessen Temperatur mit einem Thermistor gemessen wird. Die Glasröhre ist mit einem Gummiring in einem äusseren Glasrohr befestigt. Das doppelwandige Glasgefäss wird in ein konstantes Temperaturbad von 12°C getaucht.

Dieser vorbekannte Stand der Technik weist jedoch den Nachteil auf, dass die Temperaturmessung der Abkühlung in der Praxis sehr lange dauert. Weiterhin wird mit der vorbekannten Vorrichtung bzw. dem vorbekannten Verfahren eine nicht ausreichende messtechnische Auflösung der bei der Abkühlung einer Masse ablaufenden chemischen und / oder physikalischen Prozesse, insbesondere einer Kristallisation der Masse, erreicht. Weiterhin nachteilig ist der konstruktive Aufwand der Vorrichtung durch die Verwendung eines doppelwandigen Glaskolbens sowie die aufwendige Durchführung des Messverfahrens, da jeweils ein Eis-WasserGemisch vorbereitet werden muss.

Es ist daher eine Aufgabe der vorliegenden Erfindung, die Nachteile des Bekannten zu vermeiden, insbesondere also eine Vorrichtung und ein Verfahren bereitzustellen, durch das die Dauer der Abkühlung der Masse reduziert wird sowie die messtechnische Auflösung der Kinetik der ablaufenden chemischen und / oder physikalischen Prozesse in der Masse während der Abkühlung verbessert wird. Eine weitere Aufgabe ist die Vereinfachung der Durchführung des Verfahrens zur Temperaturmessung.

Diese Aufgaben werden durch eine Vorrichtung sowie ein Verfahren gemäss dem kennzeichnenden Teil der unabhängigen Ansprüche gelöst.

Unter dem Begriff "Kinetik" eines chemischen und / oder physikalischen Prozesses wird im Sinne der Anmeldung der zeitliche Ablauf dieses Prozesses verstanden. Ein chemischer Prozess ist beispielsweise unter anderem die Kristallisation einer aufgeschmolzenen Kakaomasse oder eines Fettes während der Abkühlung.

Weiterhin wird im Sinne der Anmeldung unter der Abkühlung einer Masse in Abhängigkeit der Zeit auch eine solche Abkühlung verstanden, bei der zumindest zeitweise die ablaufenden chemischen und / oder physikalischen Prozesse, d. h. die Kinetik, zu einer Temperaturerhöhung in der Masse führen.

Eine Masse ist im Sinne der Anmeldung eine fliessfähige Zusammensetzung, insbesondere eine Kakaomasse, Kakaobutter oder ein Fett. Bei der Masse kann es sich auch um Mischungen handeln, beispielsweise um Mischungen verschiedener Fette. Fliessfähig bedeutet, dass die Masse zumindest in einem Teilbereich eines Temperaturbereichs von -20°C bis 200°C, insbesondere von 0° bis 100°C, bei Umgebungsdruck in einer fliessfähigen Form vorliegt.

Die erfindungsgemässe Vorrichtung zur Temperaturmessung enthält zumindest eine Tempiervorrichtung, die in einem Temperaturbereich regelbar ist, welche insbesondere eine Peltier-Temperiervorrichtung ist. Die Temperiervorrichtung weist einen Aufnahmebereich für einen Aufnahmebehälter auf, wobei dieser insbesondere ein Einweg-Aufnahmebehälter ist. Bei bestimmungsgemässem Gebrauch des Aufnahmebehälters ist die Wärmeübertragung zwischen Aufnahmebehälter und Temperiervorrichtung durch Wärmestrahlung und Wärmeleitung erzielbar, wobei der Wärmeleitungsanteil überwiegt. Ein Kontakt zwischen der Temperiervorrichtung und einer Aussenwand des Aufnahmebehälters ist auf höchstens 80% der Fläche der Aussenwand eingestellt. Bevorzugt ist dieser Kontakt zwischen der Temperiervorrichtung und einer Aussenwand des Aufnahmebehälters auf höchstens 50%, besonders bevorzugt auf höchstens 20% und ganz besonders bevorzugt höchstens auf 1% der Fläche der Aussenwand eingestellt.

Insbesondere bevorzugt erfolgt die Wärmeleitung jedoch nicht über einen Kontakt zwischen Temperiervorrichtung und Aufnahmebehälter.

Unter einer Temperiervorrichtung, die in einem Temperaturbereich regelbar ist, wird im Sinne der vorliegenden Anmeldung verstanden, dass diese Temperiervorrichtung im spezifizierten Temperaturbereich auf eine Temperatur einstellbar ist und diese durch Regelung der Temperiervorrichtung auf der spezifizierten Temperatur stabilisiert wird. Es ist mit dieser Temperiervorrichtung aber auch möglich, dass ein Temperaturverlauf in Abhängigkeit von der Zeit im spezifizierten Temperaturbereich regelbar ist. Bei der Temperiervorrichtung kann es sich beispielsweise um eine Peltier-Temperiervorrichtung oder auch eine Flüssigkeitsströmungs-Temperiervorrichtung handeln, wobei diese bei Temperaturen über dem Gefrierpunkt von Wasser mittels Wasser betrieben werden kann und unter dem Gefrierpunkt beispielsweise mit Alkohol.

Unter der Formulierung, dass ein Kontakt zwischen der Temperiervorrichtung und einer Aussenwand des Aufnahmebehälters auf höchstens 80% der Fläche der Aussenwand eingestellt ist, wird im Sinne der Anmeldung verstanden, dass die Aussenwand des Aufnahmebehälters nur in Teilbereichen mit der Temperiervorrichtung in direktem Kontakt steht. Insbesondere sind die Temperiervorrichtung und der Aufnahmebehälter voneinander beabstandet durch beispielsweise einen Luftspalt oder ein Isoliermaterial oder durch eine beliebige Kombination von Luftspalt und Isoliermaterial in den Bereichen, in denen diese nicht in direktem Kontakt stehen.

Unter der Formulierung, dass die Wärmeleitung nicht über einen Kontakt zwischen Temperiervorrichtung und Aufnahmebehälter erfolgt, wird im Sinne der Anmeldung verstanden, dass die Temperiervorrichtung und die Aussenwand des Aufnahmebehälters voneinander beabstandet sind durch beispielsweise einen Luftspalt oder ein Isoliermaterial oder durch eine beliebige Kombination von Luftspalt und Isoliermaterial.

Ein Vorteil der erfindungsgemässen Vorrichtung liegt darin, dass mit dieser Vorrichtung die Abkühlung der Masse, die sich im Aufnahmebehälter befindet, schneller gegenüber dem Stand der Technik stattfindet. Dadurch reduziert sich die notwendige Messzeit zur Erfassung des Verlaufs der Abkühlung. Dies wird dadurch erreicht, dass die Wärmeübertragung zwischen der Masse, die sich im Aufnahmebehälter befindet, und der Temperiervorrichtung durch Wärmeleitung erfolgt. Zudem wird die Wärme mittels Strahlung abgeführt, wobei der Strahlungsanteil der abgeführten Wärme kleiner ist als der Wärmeleitungsteil. Im Stand der Technik wird hingegen die Wärme hauptsächlich durch Strahlung abgeführt und Wärmeleitung im Wesentlichen verhindert. Weiterhin ist im Stand der Technik ein Abstand zwischen Aufnahmebehälter und Temperiervorrichtung grösser, so dass die Abführung von Wärme durch Strahlung langsamer erfolgt. Beispielsweise lässt sich mit der erfindungsgemässen Vorrichtung ein sechsfach höherer Wärmestrom von der Masse in die Temperiervorrichtung bei gleicher Temperaturdifferenz zwischen Temperiervorrichtung und Aufnahmebehälter erzielen.

Somit ist es beispielsweise möglich, dass die Temperiervorrichtung auf eine höhere Temperatur gegenüber dem Stand der Technik eingestellt werden kann, welche einfacher zu regeln ist und gleichzeitig einen geringeren Energieverbrauch fordert, wobei die erforderliche Messdauer gegenüber dem Stand der Technik reduziert wird.

Die konstruktive Ausgestaltung der Vorrichtung hat weiterhin den Vorteil, dass die Wärmeleitung derart begrenzt wird, dass die Kinetik bei der Abkühlung der Masse bei geringerer Messdauer gut auflösbar ist. Dies ist notwendig, da der bei der Abkühlung gemessene Temperaturverlauf als Qualitätsmerkmal der Masse z. B. zur Schokoladenherstellung verwendet werden kann. Insbesondere wird der Temperaturverlauf zur Charakterisierung der Kristallisationsphase einer Kakaomasse, aus der Schokolade herstellbar ist, zur Bestimmung der Qualität der Kakaomasse verwendet.

Der Wärmeleitungsanteil, beispielsweise über die Luft, einen direkten Kontakt oder über eine Kombination von Luft und direktem Kontakt, an der Gesamt-Wärmeübertragung zwischen der Temperiervorrichtung und dem Aufnahmebehälter ist grösser 30%, bevorzugt grösser 40% und ganz besonders bevorzugt grösser 50%. Insbesondere liegt der Wärmeleitungsanteil in einem Bereich von 30% bis 97%, bevorzugt von 40% bis 80% und besonders bevorzugt von 50% bis 70%. Der Wärmestrahlungsanteil an der Gesamt-Wärmeübertragung zwischen der Temperiervorrichtung und dem Aufnahmebehälter liegt in einem Bereich von 3% bis 70%, bevorzugt von 4% bis 50% und ganz besonders bevorzugt von 5% bis 20%. Der Wärmeleitungsanteil sowie der Wärmestrahlungsanteil addieren sich zu 100%.

Bevorzugt ist die dem Aufnahmebereich zugewandte Aussenwand des Aufnahmebehälters bei bestimmungsgemässem Gebrauch von der Innenwand des Aufnahmebereichs beabstandbar, insbesondere beabstandet. Weiterhin weist die Vorrichtung einen Temperaturfühlerhalter auf, der zur Aufnahme eines Temperaturfühlers geeignet ist. Der Aufnahmebereich ist mit einem Fluid befüllbar, insbesondere im Wesentlichen unter Umgebungsdruck. Die Temperiervorrichtung ist in einem Temperaturbereich regelbar.

Unter Umgebungsdruck wird im Sinne der vorliegenden Anmeldung ein Druck im Bereich von 100 mbar bis 2 bar verstanden. Bevorzugt ist liegt der Umgebungsdruck im Bereich von 500 mbar bis 1.5 bar, besonders bevorzugt von 800 mbar bis 1.2 bar.

Ein weiterer Vorteil der erfindungsgemässen Vorrichtung ist eine gute Reproduzierbarkeit der Messergebnisse, da insbesondere Peltier-Temperiervorrichtungen präzise geregelt werden können. Dies führt zu einer Verringerung der möglichen Bedienungsfehler gegenüber dem Stand der Technik. Gleichzeitig führt die konstruktive Ausgestaltung der Vorrichtung zu einer gut reproduzierbaren Anordnung der einzelnen Bauelemente, was die Reproduzierbarkeit der Temperaturmessung weiter verbessert.

Zudem weist die Vorrichtung den Vorteil auf, dass durch die konstruktive Ausgestaltung die Temperiervorrichtung miniaturisierbar ist und somit die gesamte Vorrichtung kleiner gehalten werden kann und insbesondere leichter transportierbar ist.

Die Verwendung von Einweg-Aufnahmebehältern, d. h. wegwerfbaren Aufnahmebehältern, die jeweils sehr kostengünstig sind, führt zu einer vereinfachten Bedienung der Vorrichtung.

Bevorzugt ist die Temperiervorrichtung in einem Temperaturbereich von -20°C bis 40°C regelbar. Insbesondere ist die Temperiervorrichtung in einem Temperaturbereich von 1°C bis 20°C regelbar.

Dies hat den Vorteil, dass die Temperaturdifferenz zwischen der Temperatur der Masse in der Aufnahmevorrichtung und der Temperiervorrichtung so einstellbar ist, dass die Wärmeleitung und Wärmestrahlung von der Masse zur Temperiervorrichtung für die Anforderungen der jeweiligen Messungen optimiert wird. Diese Anforderungen sind unter anderem die Geschwindigkeit der Messung und die Auflösung der Kinetik. Beispielsweise wird bei Einstellung der Temperiervorrichtung auf 15°C anstatt 5°C die effektive Wärmeleitung und effektive Wärmestrahlung bei der höheren Temperatur, d.h. 15°C, von der Masse in die Temperiervorrichtung bei gleicher Temperatur der Masse verringert, so dass unter Umständen die Kinetik bei der Abkühlung mit besserer Auflösung messbar ist.

Insbesondere bevorzugt ist der Temperaturfühlerhalter und / oder eine Temperaturfühleraufnahme thermostatisierbar.

Unter Thermostatisierung wird hier eine Regelung der Temperatur des Temperaturfühlerhalters, der Temperaturfühleraufnahme oder des Temperaturfühlerhalters und der Temperaturfühleraufnahme verstanden, insbesondere auf eine im Wesentlichen konstante Temperatur.

Eine Temperatur wird im Sinne der Anmeldung als im Wesentlichen konstant thermostatisiert angesehen, wenn diese in einem Bereich von ± 2°C, insbesondere von ± 1°C, konstant gehalten wird.

Dies hat den Vorteil, dass die Temperatur des Temperaturfühlers weiter stabilisiert werden kann und damit eine genauere Temperaturmessung der Masse erreichbar ist.

Besonders bevorzugt ist zumindest das durch die Innenwand des Aufnahmebereichs und die Aussenwand des Aufnahmebehälters bei bestimmungsgemässem Gebrauch definierte Volumen mit einem Fluid befüllbar oder befüllt, wobei zumindest einer der Parameter Druck, Temperatur und Feuchtigkeit einzeln oder in beliebiger Kombination einstellbar ist.

Diese Ausgestaltung der Vorrichtung hat den Vorteil, dass die Wärmeleitung zwischen der Masse im Aufnahmebehälter und der Temperiervorrichtung an die jeweiligen Anforderungen der Messung anpassbar ist.

Bevorzugt ist das Fluid aus der Liste der folgenden Gase einzeln oder in beliebiger Mischung wählbar: Luft, Stickstoff, Argon, Helium.

Dies hat den Vorteil, dass durch die Wahl des Gases, mit dem der Aufnahmebereich der Temperiervorrichtung gefüllt wird, die Wärmeleitung zwischen der Masse im Aufnahmebehälter und der Temperiervorrichtung einstellbar ist.

In einer weiteren bevorzugten Ausführungsform ist ein Abstand zwischen Innenwand des Aufnahmebereichs und der Aussenwand des Aufnahmebehälters bei bestimmungsgemässem Gebrauch einstellbar.

Die Möglichkeit der Einstellung des Abstandes zwischen Innenwand und Aussenwand bei bestimmungsgemässem Gebrauch hat den Vorteil, dass die Wärmeleitung und Wärmestrahlung zwischen der Masse im Aufnahmebehälter und der Temperiervorrichtung an die Anforderungen der Messung einstellbar ist.

Der Abstand zwischen Innenwand und Aussenwand ist beispielsweise durch die Geometrie des Aufnahmebereichs und / oder des Aufnahmebehälters einstellbar.

Bevorzugt ist der Aufnahmebehälter aus Metall, insbesondere Aluminium, Kunststoff oder einer beliebigen Kombination dieser Materialien gefertigt.

Dies hat den Vorteil, dass das für die jeweilige Messung benötigte Material in Abhängigkeit von der geforderten Wärmeleitung sowie Wärmestrahlung und der zu verwendenden Masse, die in den Aufnahmebehälter eingefüllt werden soll, auswählbar ist.

Weiter ganz besonders bevorzugt weist die Aussenwand des Aufnahmebehälters zumindest teilweise eine mittlere Oberflächenrauheit Ra im Bereich von 0,2 $\mu$m bis 5,2 $\mu$m, bevorzugt von 1 $\mu$m bis 4 $\mu$m und besonders bevorzugt von 1.5 $\mu$m bis 3.5 $\mu$m auf.

Die mittlere Oberflächenrauheit Ra wird auch als Mittenrauwert bezeichnet.

Die Oberflächenrauheit wird dabei gemäss DIN EN ISO 4287 gemessen, beispielsweise mit einem Perthometer M2 der Firma Mahr.

Dies hat den Vorteil, dass durch die Rauheit der Oberfläche diese vergrössert wird und damit die Wärmeleitung und Wärmestrahlung verbessert wird. Somit kann durch Auswahl der Oberflächenrauheit der Aussenwand die Wärmeleitung und Wärmestrahlung zwischen Aufnahmebehälter und Temperiervorrichtung eingestellt werden.

Weiter ganz besonders bevorzugt weist die Aussenwand des Aufnahmebehälters zumindest teilweise eine rippenartige Struktur auf.

Dies hat den Vorteil, dass die Oberfläche der Aussenwand vergrössert wird und damit die Wärmeleitung und Wärmestrahlung zwischen Aufnahmebehälter und Temperiervorrichtung verbessert wird. Somit ist die Wärmeleitung durch die Auswahl der Rippen auf der Oberfläche der Aussenwand einstellbar.

Die Rippen können dabei im Wesentlichen parallel zur Achse des Aufnahmebehälters, im Wesentlichen senkrecht zu dieser Achse oder in einem beliebigen Winkel zu dieser Achse ausgebildet sein.

Insbesondere können die Rippen zumindest teilweise bei bestimmungsgemässem Gebrauch des Aufnahmebehälters mit der Temperiervorrichtung in Kontakt stehen.

In einer besonders bevorzugten alternativen Ausführungsform weist der Temperaturfühlerhalter einen Wärmeleitungsbereich, insbesondere eine Leithülse, mit einer ersten Wärmeleitung und einen Wärmedämmungsbereich mit einer zweiten Wärmeleitung auf, wobei die erste Wärmeleitung grösser als die zweite Wärmeleitung ist. Insbesondere weist der Temperaturfühlerhalter den Wärmeleitungsbereich höherer Wärmeleitung auf der einem einsetzbaren Temperaturfühler im Wesentlichen zugewandten Seite auf. Insbesondere bevorzugt umschliesst der Wärmedämmungsbereich tieferer Wärmeleitung den Wärmeleitungsbereich höherer Wärmeleitung im Wesentlichen auf der der Temperiervorrichtung abgewandten Seite.

Bevorzugt besteht der Temperaturfühlerhalter aus Metall, insbesondere Aluminium, oder Kunststoff. Besonders bevorzugt besteht der Temperaturfühlerhalter aus einer beliebigen Kombination dieser Materialien. Insbesondere bevorzugt weist der Temperaturfühlerhalter Aussparungen auf, die beispielsweise mit einem Fluid befüllbar sind oder sonstigen Isoliermaterialien.

Bevorzugt besteht der Wärmeleitungsbereich höherer Wärmeleitung aus Metall, insbesondere aus Aluminium. Der Wärmedämmungsbereich tieferer Wärmeleitung besteht bevorzugt aus Kunststoff oder aus mit Fluid befüllbaren Aussparungen oder einer beliebigen Kombination aus Kunststoff und Aussparungen.

Dies hat den Vorteil, dass die konstruktive Ausgestaltung des Temperaturfühlerhalters so ausgewählt werden kann, dass dieser durch die Temperiervorrichtung temperiert wird und eine hohe Wärmekapazität aufweist, so dass beispielsweise Schwankungen der Umgebungstemperatur einen vernachlässigbaren Einfluss auf die Temperaturmessung haben. Dies führt zu einer verbesserten Genauigkeit der gemessenen Temperaturen bei der Abkühlung der Masse.

Der Wärmeleitungsbereich höherer Wärmeleitung wird beispielsweise durch die Temperiervorrichtung temperiert, d.h. die Temperiervorrichtung und der Wärmeleitungsbereich höherer Wärmeleitung sind gut wärmeleitend miteinander verbunden, beispielsweise über einen Abstandshalter, und damit geregelt. Es ist aber beispielsweise auch möglich, dass der Wärmeleitungsbereich höherer Wärmeleitung, insbesondere die Leithülse, mit einer Temperaturregel-Vorrichtung thermostatisiert wird. Zudem wird der Wärmeleitungsbereich durch den Wärmedämmungsbereich gegenüber der Umgebung so umschlossen, dass die Einflüsse der Temperaturschwankungen in der Umgebung weiter reduziert werden. Damit wird erreicht, dass die Temperatur in der Temperiervorrichtung weiter stabilisiert wird zur genaueren Messung.

Weiter ganz besonders bevorzugt ist ein Abstandshalter in der Temperiervorrichtung aufnehmbar zur Aufnahme des Aufnahmebehälters.

Die Verwendung eines Abstandshalters, insbesondere eines Distanzrings, hat den Vorteil, dass durch diesen zumindest ein Teil der Wärmeleitung zwischen Aufnahmebehälter und Temperiervorrichtung erfolgt und diese somit durch die konstruktive Ausgestaltung und die Materialwahl des Abstandshalters einstellbar ist.

Der Abstandshalter weist bei bestimmungsgemässem Gebrauch vorteilhaft eine Dicke parallel zur Senkrechten auf die Öffnung des Aufnahmebereichs von 0.1 mm bis 50 mm auf. Vorzugsweise weist der Abstandshalter eine Dicke von 2 bis 6 mm, besonders bevorzugt von 3 mm bis 5 mm auf.

Ein als Distanzring ausgebildeter Abstandshalter weist üblicherweise einen Innendurchmesser von 15 mm bis 60 mm auf, bevorzugt von 20 mm bis 40 mm und besonders bevorzugt von 25 mm bis 35 mm.

Durch die Auswahl des Abstandshalters ist insbesondere eine Einstellung des Abstandes zwischen Innenwand des Aufnahmebereichs und der Aussenwand des Aufnahmebehälters möglich.

Unter Innenwand sowie Aussenwand wird nicht eine Bodenfläche bei bestimmungsgemässem Gebrauch der Vorrichtung verstanden.

Der Abstand zwischen der Aussenwand des Aufnahmebehälters und der Innenwand des Aufnahmebereichs ist insbesondere durch die Wahl des Abstandshalters in einem Bereich von 0.13 mm bis 6.5 mm einstellbar. Vorzugsweise beträgt dieser Abstand 0.3 mm bis 0.7 mm, besonders bevorzugt 0.4 mm bis 0.6 mm.

Im Sinne der Anmeldung wird unter dem Abstand zwischen Aussenwand des Aufnahmebehälters und Innenwand des Aufnahmebereichs der mittlere Abstand entlang einer Senkrechten auf der Innenwand zwischen Innenwand und Aussenfläche verstanden. Ein Bodenbereich des Aufnahmebehälters wird dabei nicht berücksichtigt.

Bevorzugt besteht der Abstandshalter aus Metall, insbesondere Aluminium oder Stahl, Kunststoff oder einer beliebigen Kombination dieser Materialien.

Durch die Wahl der Dimension und des Material des Abstandshalters ist die Wärmeleitung zwischen Temperiervorrichtung und Aufnahmebehälter über den Abstandshalter einstellbar. Der Wärmeleitungsanteil zwischen der Temperiervorrichtung und dem Aufnahmebehälter über den Abstandshalter liegt in einem Bereich von 10% bis 50%, bevorzugt von 20% bis 40% und besonders bevorzugt von 25% bis 35%.

In einer alternativen, besonders bevorzugten Ausführungsform ist die Vorrichtung mit einem Computer verbunden zur Steuerung der Vorrichtung sowie zur Aufnahme der gemessenen Temperaturen.

Unter Steuerung der Vorrichtung werden im Sinne der Anmeldung eine Steuerung und eine Regelung der Vorrichtung durch den Computer verstanden.

Dies hat den Vorteil, dass die gesamte Messung beispielsweise mittels des Computers automatisiert durchführbar ist. Somit wird der Messaufwand verringert und die Bedienung des Gerätes vereinfacht. Weiterhin verringert sich damit vorteilhaft die Anzahl möglicher Bedienungsfehler während der Messung, was den Trainingsaufwand für das die Versuche durchführende Personal verringert und die Zuverlässigkeit der Messungen erhöht.

Ein weiterer Vorteil der Automatisierung besteht darin, dass die Auswertung der gemessenen Temperaturen zur Beurteilung der Qualität der Masse bereits durch den Computer durchgeführt werden kann.

Ein weiterer Aspekt der Erfindung ist gerichtet auf ein Verfahren zur Temperaturmessung einer Masse, mit einer Vorrichtung wie oben beschrieben. In einem Verfahrensschritt wird ein Aufnahmebehälter der Vorrichtung mit einer Masse befüllt. Die Vorrichtung weist dabei eine regelbare Temperiervorrichtung, insbesondere eine Peltier-Temperiervorrichtung auf. Die Temperiervorrichtung weist einen Aufnahmebereich für einen Aufnahmebehälter auf, wobei dieser Aufnahmebehälter insbesondere ein Einweg-Aufnahmebehälter ist. Bei bestimmungsgemässem Gebrauch des Aufnahmebehälters ist die Wärmeübertragung zwischen Aufnahmebehälter und Temperiervorrichtung durch Wärmestrahlung und Wärmeleitung erzielbar, wobei der Wärmeleitungsanteil überwiegt. Ein Kontakt zwischen der Temperiervorrichtung und einer Aussenwand des Aufnahmebehälters ist auf höchstens 80% der Fläche der Aussenwand eingestellt. Bevorzugt ist dieser Kontakt zwischen der Temperiervorrichtung und einer Aussenwand des Aufnahmebehälters auf höchstens 50%, besonders bevorzugt auf höchstens 20% und ganz besonders bevorzugt höchstens auf 1% der Fläche der Aussenwand eingestellt. In einem weiteren Verfahrensschritt erfolgt das Aufschmelzen der Masse auf zumindest 50°C, bevorzugt auf zumindest 70°C. Dieser Schritt kann auch vor dem vorgängig beschriebenen Verfahrensschritt durchgeführt werden. Die Temperatur der Temperiervorrichtung wird auf die für die Messung benötigte Temperatur geregelt, bevorzugt in einem Temperaturbereich von -20°C bis 40°C, insbesondere bevorzugt von 1°C bis 20°C. Auch dieser Verfahrensschritt kann in beliebiger Reihenfolge im Verhältnis zu den vorgängig beschriebenen Verfahrensschritten durchgeführt werden. In einem weiteren Verfahrensschritt wird der Aufnahmebehälter in den Aufnahmebereich eingesetzt. Auch dieser Verfahrensschritt kann in beliebiger Reihenfolge im Verhältnis zu den vorgängig beschriebenen Verfahrensschritten durchgeführt werden. Daraufhin wird die Temperatur der Masse in Abhängigkeit von der Zeit mittels des Temperaturfühlers gemessen. Die gemessene Temperatur wird gespeichert, wobei insbesondere gemessene Temperatur-Zeit-Paare gespeichert werden.

Dieses Verfahren wird bevorzugt mit der oben beschriebenen Vorrichtung durchgeführt und weist damit alle oben beschriebenen Vorteile der Vorrichtung auf.

Ein weiterer Aspekt der Erfindung ist gerichtet auf die Verwendung der oben beschriebenen Vorrichtung zur Bestimmung des Kristallisationsverhaltens einer Masse, insbesondere von Kakaobutter, pflanzlichem Fett oder einer Kakaomasse.

Bevorzugt wird das Kristallisationsverhalten mittels eines Expertensystems charakterisiert.

Als Expertensystem werden unter anderem Software-Systeme bezeichnet, die auf der Basis von Expertenwissen beispielsweise eine Bewertung von Daten automatisiert durchführen können. Als Expertenwissen werden hier beispielsweise Sammlungen von Temperaturverläufen verwendet, die im Expertensystem gespeichert sind und die als gut oder schlecht definiert sind durch einen Fachmann. Das Expertensystem kann nun einen gemessenen Temperaturverlauf mit diesen gespeicherten Temperaturverläufen vergleichen und den gemessenen Temperaturverlauf entsprechend bewerten, beispielsweise als gut oder schlecht.

Dies hat den Vorteil, dass das Kristallisationsverhalten der Masse automatisiert charakterisiert werden kann und somit die Qualität der Masse bestimmt werden kann. Dies erfolgt vorteilhaft unter anderem durch die Bewertung der Lage und Form der gemessenen Abkühlung durch die Auswertung der gemessenen Temperatur-Zeit-Paare.

Als Expertensystem eignet sich beispielsweise ein selbstlernendes, neuronales Netz, welches mit Expertenwissen kombinierbar ist.

Unter anderem können hierbei Mustererkennungsverfahren zur Charakterisierung der gesamten Abkühlungskurve verwendet werden. Weiterhin sind durch das Expertensystem charakteristische Bereiche und Punkte der Abkühlungskurve, die zur Qualitätsbeurteilung der Masse verwendbar sind, detektierbar. Hierbei handelt es sich beispielsweise um die Steigung und Lage der Abkühlungskurve, Minimalwerte und Maximalwerte der Temperatur in Abhängigkeit von der Zeit, Flächen unter der Kurve und Verhältnisse, welche aus mittleren Temperaturen gebildet werden.

Ein zusätzlicher Aspekt der Erfindung ist gerichtet auf ein Computerprogramm, welches direkt in den internen Speicher eines digitalen Computers geladen werden kann und Softwarecodeabschnitte umfasst. Somit ist eine Vorrichtung wie oben beschrieben steuerbar, insbesondere zur Durchführung eines Verfahrens wie oben beschrieben, wenn das Produkt auf einem Computer läuft.

Diese Steuerung einer erfindungsgemässen Vorrichtung zur Durchführung eines erfindungsgemässen Verfahrens hat den Vorteil, dass dieses im Wesentlichen automatisiert durchführbar ist. Dadurch reduziert sich der Ausbildungsaufwand für das Personal, welches das Verfahren durchführt, sowie die Anzahl Fehlerquellen, die bei manueller, d. h. nicht-automatisierter Bedienung häufig auftreten.

Ein weiterhin zusätzlicher Aspekt der Erfindung ist gerichtet auf die Verwendung eines Abstandshalters, insbesondere eines Distanzrings, in einer Vorrichtung wie oben beschrieben. Dieser Abstandshalter wird zur Einstellung eines Abstandes zwischen einer Innenwand einer Temperiervorrichtung und einer Aussenwand eines Aufnahmebehälters bei bestimmungsgemässen Gebrauch des Aufnahmebehälters verwendet.

Dieser Abstandshalter weist die bereits oben aufgeführten Vorteile auf.

Die Erfindung wird nachfolgend anhand von Ausführungsbeispielen zum besseren Verständnis näher erläutert, ohne dass die Erfindung auf die Ausführungsbeispiele zu beschränken ist. Es zeigen:

Fig. 1:      Schnitt durch eine erfindungsgemässe Vorrichtung;

Fig. 2:    Schnitt durch eine alternative erfindungsgemässe Vorrichtung, die mittels eines Computers gesteuert wird;

Fig. 3:    Schnitt durch eine erfindungsgemässe Temperiervorrichtung ohne Aufnahmebehälter und Temperaturfühlerhalter;

Fig. 4:    Vergrösserung eines Ausschnitts gemäss Fig. 2;

Fig. 5:    Abkühlung von Kakaobutter mit und ohne Luftspalt;

Fig. 6:    Vergleich der Abkühlung zwischen Kakaobutter und Sonnenblumenöl;

Fig. 7:    Schnitt durch eine erfindungsgemässe alternative Vorrichtung mit Temperaturfühlerhalter;

Fig. 8:    Schnitt durch eine erfindungsgemässe alternative Vorrichtung mit Temperaturfühlerhalter und Temperaturfühler;

Fig. 9a:    Schnitt durch einen erfindungsgemässen Aufnahmebehälter parallel zur Achse des Aufnahmebehälters;

Fig. 9b:    Schnitt durch eine alternativen erfindungsgemässen Aufnahmebehälter senkrecht zur Achse des Aufnahmebehälters mit spitzen Rippen;

Fig. 9c:    Schnitt durch einen weiteren erfindungsgemässen Aufnahmebehälter senkrecht zur Achse des Aufnahmebehälters mit abgeflachten Rippen;

Fig. 9d:    Schnitt durch einen weiteren alternativen erfindungsgemässen Aufnahmebehälter senkrecht zur Achse des Aufnahmebehälters mit abgerundeten Rippen;

Fig. 10:    Auswertung eines gemessenen Temperaturverlaufs einer Kakaobutter;

Fig. 11:    Messung des Temperaturverlaufs dreier unterschiedlicher Proben von Kakaobutter.

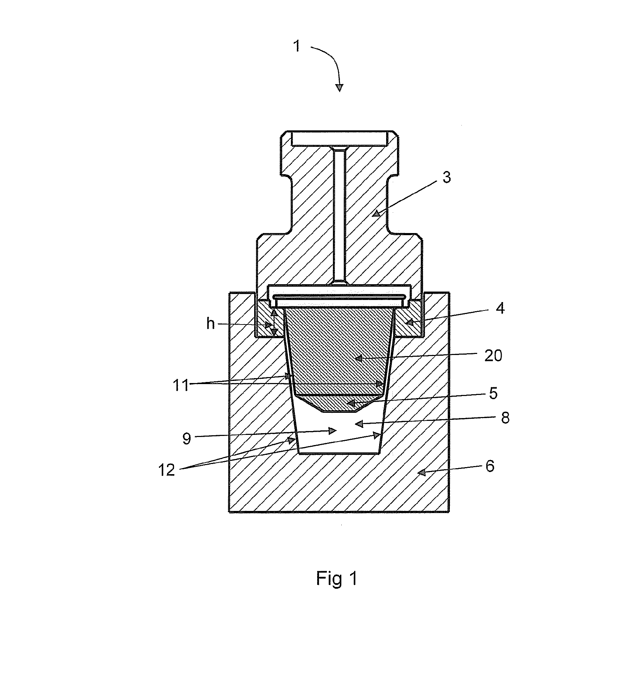

Fig. 1 zeigt einen Schnitt durch eine erfindungsgemässe Vorrichtung 1 mit einem Aufnahmebehälter 5, der mit einer Masse 20 gefüllt ist. Die Temperiervorrichtung 6, die hier als Wasserkühlungsvorrichtung ausgebildet ist, weist einen Aufnahmebereich 9 auf. Die Temperiervorrichtung 6 ist konstruktiv derart ausgestaltet, dass diese den Abstandshalter 4, der als Distanzring ausgebildet ist, mit der Höhe h von 3 mm aufnehmen kann. In diesem Abstandshalter 4 ist der Aufnahmebehälter 5 mit der Masse 20 einsetzbar. Durch die Höhe h des Abstandshalters 4 von 3 mm stellt sich zwischen der Aussenwand 11 des Aufnahmebehälters und der Innenwand 12 des Aufnahmebereichs 9 ein Abstand von 0.3 mm ein. Dieser Abstand wird entlang der Senkrechten auf der Innenwand 12 bestimmt. Ein aus Aluminium bestehender Temperaturfühlerhalter 3 umschliesst in eingesetztem Zustand den Abstandshalter 4 und den Aufnahmebehälter 5 auf der der Temperiervorrichtung 6 abgewandten Seite.

Der Aufnahmebereich 9 der Temperiervorrichtung 6 ist mit Stickstoff befüllt mit einem Druck von 1.2 bar.

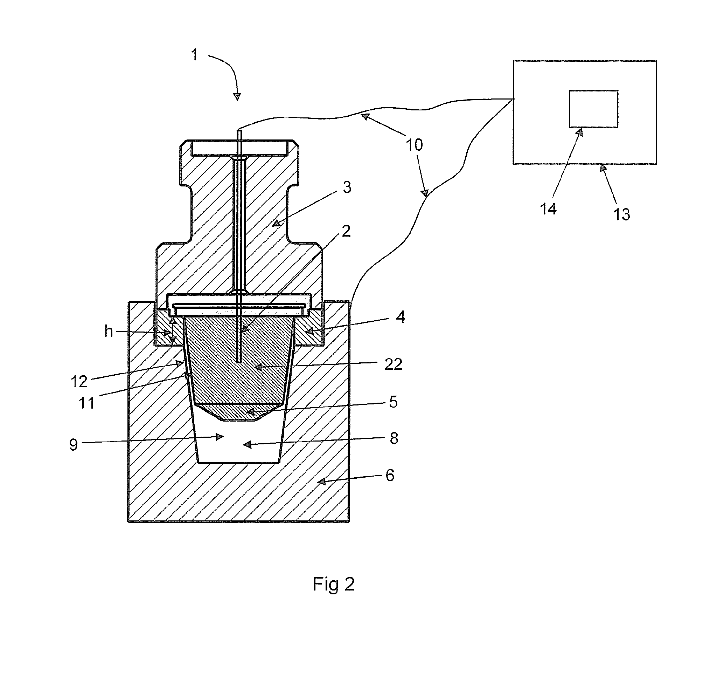

In Fig. 2 ist ein Schnitt durch eine alternative erfindungsgemässe Vorrichtung 1 dargestellt, die mittels zwei Kabeln 10 mit einem Computer 13 verbunden sind, der ein Expertensystem 14 beinhaltet.

Die Vorrichtung 1 weist eine Temperiervorrichtung 6 mit einem Aufnahmebereich 9 auf, der mit Luft unter Umgebungsdruck, d. h. mit einem Druck von etwa 1 bar befüllt ist. In die Temperiervorrichtung 6 ist ein Abstandshalter 4, der hier als Distanzring ausgebildet ist, mit einer Höhe h von 4 mm eingesetzt. Der Abstandshalter 4 ist auf der von der Temperiervorrichtung abgewandten Seite bei bestimmungsgemässem Gebrauch mit einer Aussparung ausgestaltet, so dass dieser einen Aufnahmebehälter 5 aufnehmen kann. Die Höhe h des Abstandshalters 4 ist hier so gewählt, dass die Aussenwand 11 des Aufnahmebehälters 5 und die Innenwand 12 der Temperiervorrichtung 6 einen Abstand von 0.52 mm aufweisen. Ein aus Kunststoff hergestellter Temperaturfühlerhalter 3 umschliesst den Aufnahmebehälter 5 auf der der Temperiervorrichtung abgewandten Seite derart, dass radial zur Längsachse des Temperaturfühlerhalters in diesem Bereich im Wesentlichen keine Wärme durch Wärmeleitung mittels Luft in die Umgebung abgeführt werden kann. In den Temperaturfühlerhalter 3 ist ein Temperaturfühler 2 eingesetzt, der in direktem Kontakt mit der Kakaobutter 22 steht, die sich in dem Aufnahmebehälter 5 befindet. Der Aufnahmebehälter 5 hat hier ein Fassungsvolumen von 15 ml.

Der Computer 13 mit dem Expertensystem 14 ist mittels der Kabel 10 mit der Temperiervorrichtung 6 und dem Temperaturfühler 2 verbunden. Die Temperiervorrichtung 6 wird nun mittels des Computers 13 so gesteuert, dass die für die Messung benötigte Temperatur in der Temperiervorrichtung 6 eingestellt wird und diese auch trotz möglicher Schwankungen in der Umgebungstemperatur im Inneren der Temperiervorrichtung 6 im Wesentlichen für die Messung konstant gehalten werden kann. Durch den direkten Kontakt zwischen Temperiervorrichtung 6 und Temperaturfühlerhalter 3 wird auch dieser im Wesentlichen auf eine konstante Temperatur gebracht, so dass Schwankungen der Umgebungstemperatur einen geringen Einfluss auf den Temperaturfühler haben. Dies führt dazu, dass die Genauigkeit der Messung erhöht wird.

Während der Messung wird also mittels des Temperaturfühlers 2 die Abkühlung der Kakaobutter 22, die eine Anfangstemperatur von 50°C aufweist, gemessen. Diese Temperaturen werden mittels des Kabels 10 vom Temperaturfühler 2 an den Computer übertragen und durch diesen ausgewertet.

Bei der Abkühlung der Kakaobutter 22 in der Vorrichtung 1 wird die Wärme der Kakaobutter 22 zu ca. 63% durch Wärmeleitung über die Luft 8 von der Kakaobutter 22 im Aufnahmebehälter 5 in die Temperiervorrichtung 6 abgeführt. Weiterhin wird Wärme aus der Kakaobutter 22 zu ca. 30% über den Abstandshalter 4 in die Temperiervorrichtung 6 abgeführt. Der kleinste Teil der Abfuhr der Wärme aus der Kakaobutter 22 in die Temperiervorrichtung 6 erfolgt durch Strahlung mit einem Anteil von ca. 7%.

Eine gerätespezifische Wärmedurchgangszahl hat hier einen Wert von 0.184 W/K, was etwa sechsmal grösser ist als im Stand der Technik gemäss Shukoff.

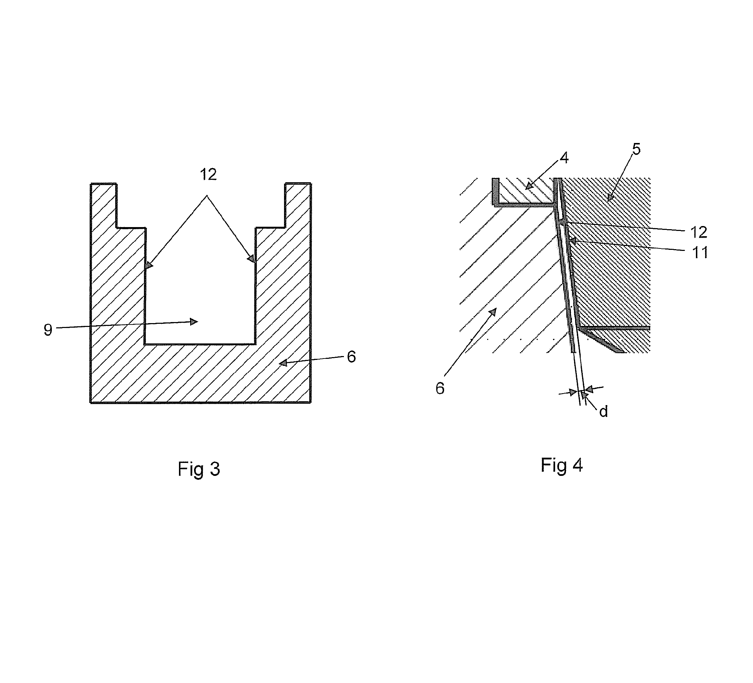

Fig. 3 zeigt einen Schnitt durch eine alternative Ausführungsform der Temperiervorrichtung 6. Die Temperiervorrichtung 6 weist hier einen Aufnahmebereich 9 auf, der eine rechteckige Form hat mit den Innenwänden 12. Der hier gezeigte Aufnahmebereich 9 weist im Gegensatz zu den in Fig. 1 und Fig. 2 dargestellten Aufnahmebereichen keinen konischen Verlauf auf.

In Fig. 4 ist der Abstand d zwischen der Innenwand 12 der Temperiervorrichtung 6 und der Aussenwand 11 des Aufnahmebehälters 5 in vergrösserter Darstellung der Fig. 2 gezeigt. Die Innenwand 12 und die Aussenwand 11 weisen einen Abstand d von 0.52 mm auf. Dieser Abstand d ist durch die Wahl des Abstandshalters 4 einstellbar.

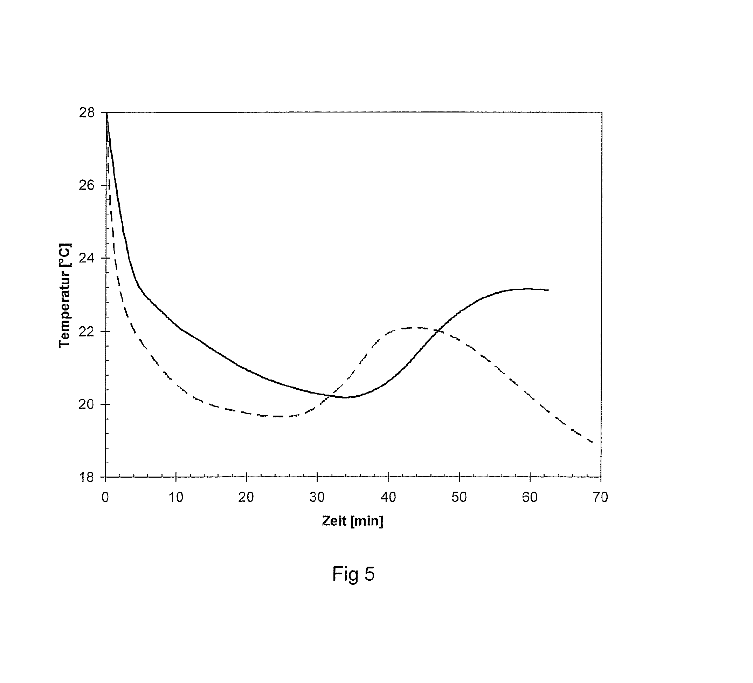

In Fig. 5 ist eine Messung der Temperatur in Abhängigkeit von der Zeit von Kakaobutter dargestellt. Die gestrichelte Linie stellt dabei eine Messung mit einem Abstand von 0 mm zwischen Innenwand der Temperiervorrichtung und Aussenwand des Aufnahmebehälters dar, d. h. die Innenwand der Temperiervorrichtung und die Aussenwand des Aufnahmebehälters stehen in direktem Kontakt. Die durchgezogene Linie stellt eine Messung mit einem Abstand zwischen Innenwand der Temperiervorrichtung und Aussenwand des Aufnahmebehälters von 0.52 mm dar.

Im Gegensatz zur gestrichelten Kurve ist ein Wendepunkt bei einer Zeit von etwa 5 Minuten auf der durchgezogenen Kurve deutlicher ausgeprägt, und auch der absolute Temperaturanstieg nach Ablauf von etwa 35 Minuten für die durchgezogene Kurve ist grösser als der Temperaturanstieg nach ca. 25 Minuten für die gestrichelte Kurve. Dieser Wendepunkt, der den Beginn der Kristallisation einer Kakaomasse indiziert, sowie der Temperaturanstieg in der Haupt-Kristallisationsphase, d. h. das Kristallwachstum und die Kristallumwandlung, sind somit bei einer Messung in einer erfindungsgemässen Vorrichtung deutlicher ausgeprägt als im Stand der Technik und somit besser auswertbar. Dies ist insbesondere wichtig bei einer automatisierten Auswertung der Messung mittels eines Expertensystems.

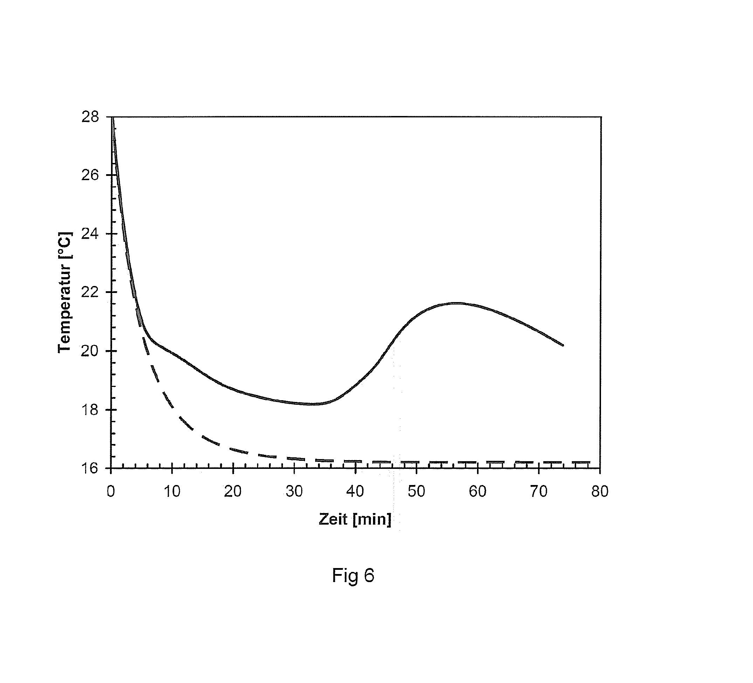

In Fig. 6 ist eine Messung der Temperatur in Abhängigkeit von der Zeit von Kakaobutter und Sonnenblumenöl dargestellt. Die gestrichelte Linie stellt dabei eine Messung des Sonnenblumenöls dar und die durchgezogene Kurve eine Messung von Kakaobutter. Es ist eindeutig erkennbar, dass durch die physikalischen und / oder chemischen Prozesse, insbesondere die Kristallisation, die bei der Abkühlung in der Kakaobutter auftreten, die Abkühlungskurven voneinander unterscheidbar sind.

Zur Bestimmung des Kristallisationsverhaltens von Kakaobutter kann nun die Fläche in einem definierten Temperaturbereich zwischen den Kurven gemessen werden und die Kakaobutter bezüglich ihrer Qualität charakterisiert werden.

Da insbesondere die Abkühlungskurve von Sonnenblumenöl gut reproduzierbar ist und hauptsächlich von der Umgebungstemperatur abhängt, ist es möglich, diese beispielsweise in einem Computer abzuspeichern und die oben beschriebene Flächenbestimmung über eine im Computer.

Hierzu werden in einem ersten Schritt Wendepunkte der Kurve, Minima und Maxima sowie Flächen in definierten Intervallen bestimmt. Mit diesen Werten ist dann durch Vergleich mit gespeicherten Temperaturverläufen, die jeweils als gut oder schlecht gekennzeichnet sind, eine Bewertung der Qualität der Kakaobutter möglich.

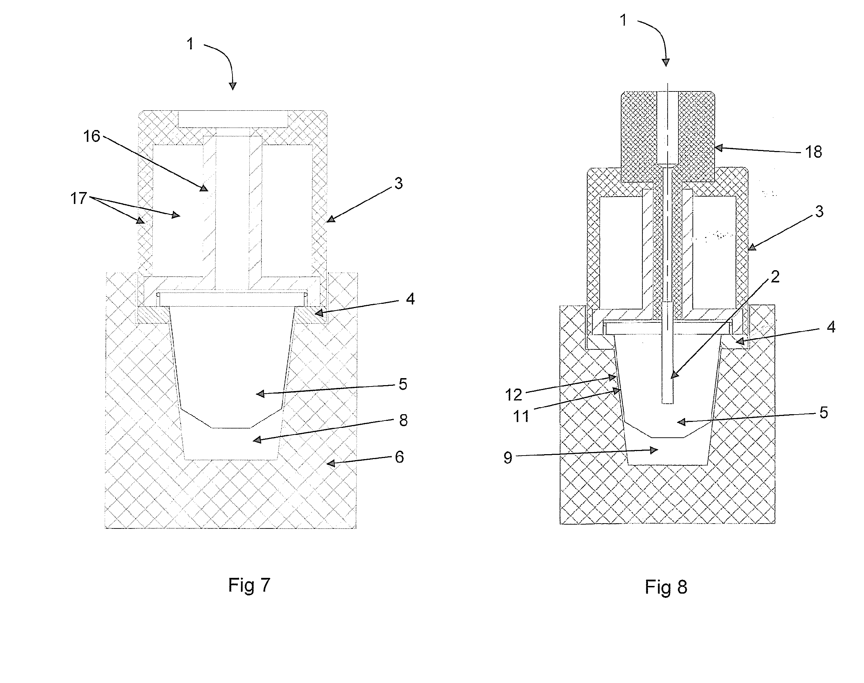

In Figur 7 ist ein Schnitt durch eine erfindungsgemässe alternative Vorrichtung mit Temperaturfühlerhalter 3 dargestellt. Gleiche Referenzzeichen in Figur 7 bezeichnen gleiche Komponenten wie in Figur 2 beschrieben.

Im Unterschied zur Figur 2 weist der hier dargestellte Temperaturfühlerhalter 3 einen Wärmeleitungsbereich 16 auf, der als Leithülse aus Aluminium ausgebildet ist. Der Wärmeleitungsbereich 16 ist von der der Vorrichtung 1 abgewandten Seite teilweise von den mit Luft oder Isoliermaterial gefüllten Bereichen umschlossen. Der Temperaturfühlerhalter 3 ist gegenüber der Umgebung durch einen Wärmedämmungsbereich 17 umschlossen. Dadurch wird eine bessere Temperierung des in den Temperaturfühlerhalter 3 einsetzbaren Temperaturfühlers erreicht.

Der Temperaturfühlerhalter 3 wird im Bereich der Leithülse mit einem hier nicht gezeigten Peltier-Thermostaten auf ca. 15°C thermostatisiert.

In Figur 8 ist ein Schnitt durch eine erfindungsgemässe alternative Vorrichtung mit Temperaturfühlerhalter 3 mit Temperaturfühler 2 dargestellt. Gleiche Referenzzeichen in Figur 8 bezeichnen gleiche Komponenten wie in Figur 2 beschrieben.

Der Temperaturfühler 2 ist in eine Temperaturfühleraufnahme 18 eingesetzt, die konstruktiv so ausgestaltet ist, dass der Temperaturfühlerhalter 3 diese Temperaturfühleraufnahme 18 aufnehmen kann. Der Temperaturfühler 2 ist dabei so ausgestaltet, dass dieser Temperaturen sowie deren Änderungen im Aufnahmebehälter 5 messen kann.

Die Temperaturfühleraufnahme 18 und der Temperaturfühlerhalter 3 werden mit einer hier nicht gezeigten Vorrichtung auf ca. 15°C thermostatisiert.

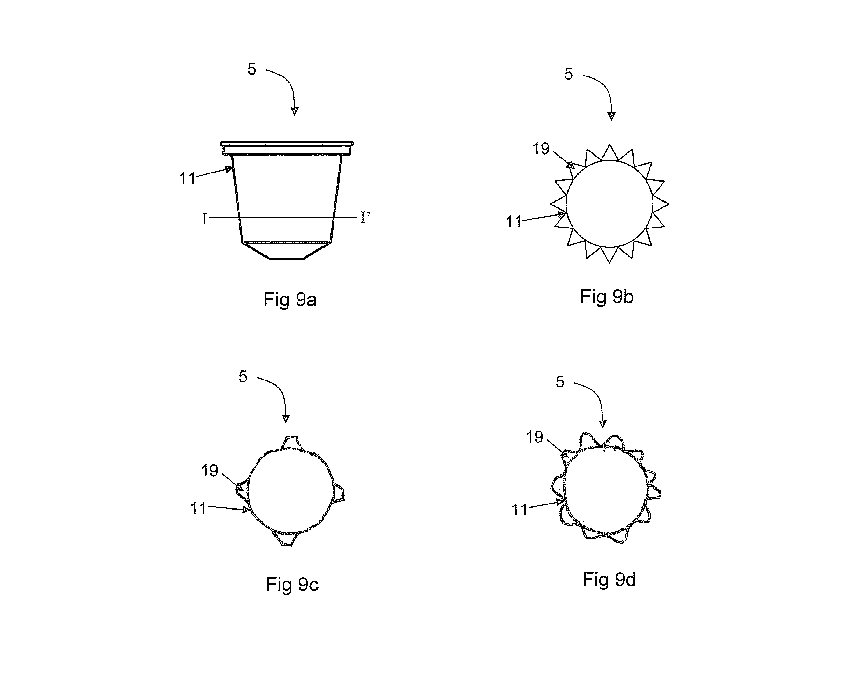

Figur 9a zeigt einen Schnitt durch einen erfindungsgemässen Aufnahmebehälter 5 parallel zur Achse des Aufnahmebehälters 5. Der Aufnahmebehälter 5 weist eine Aussenfläche 11 auf. Die Linie I-I' stellt eine Schnittlinie dar, entlang der ein Schnitt jeweils in den Figuren 9b bis 9d dargestellt ist.

In Figur 9b ist ein Schnitt durch einen alternativen erfindungsgemässen Aufnahmebehälter 5 entlang der Linie I-I' der Figur 9a dargestellt. Der Aufnahmebehälter 5 weist eine Aussenfläche 11 mit spitzen Rippen 19 auf.

Bei erfindungsgemässem Gebrauch des Aufnahmebehälters 5 können diese Rippen 19 mit einer Innenwand einer hier nicht gezeigten Temperiervorrichtung in direktem Kontakt stehen zur Erhöhung der Wärmeleitung.

Auch bei den im folgenden erläuterten Figuren 9c und 9d können bei erfindungsgemässem Gebrauch des jeweiligen Aufnahmebehälters die jeweils dargestellten Rippen mit einer Innenwand einer jeweils nicht gezeigten Temperiervorrichtung in direktem Kontakt stehen zur Erhöhung der Wärmeleitung.

In Figur 9c ist ein Schnitt durch einen weiteren erfindungsgemässen Aufnahmebehälter 5 entlang der Linie I-I' der Figur 9a dargestellt. Der Aufnahmebehälter 5 weist eine Aussenfläche 11 mit vier abgeflachten Rippen 19 auf.

In Figur 9d ist ein Schnitt durch einen weiteren alternativen erfindungsgemässen Aufnahmebehälter 5 entlang der Linie I-I' der Figur 9a dargestellt. Der Aufnahmebehälter 5 weist eine Aussenfläche 11 mit abgerundeten Rippen 19 auf.

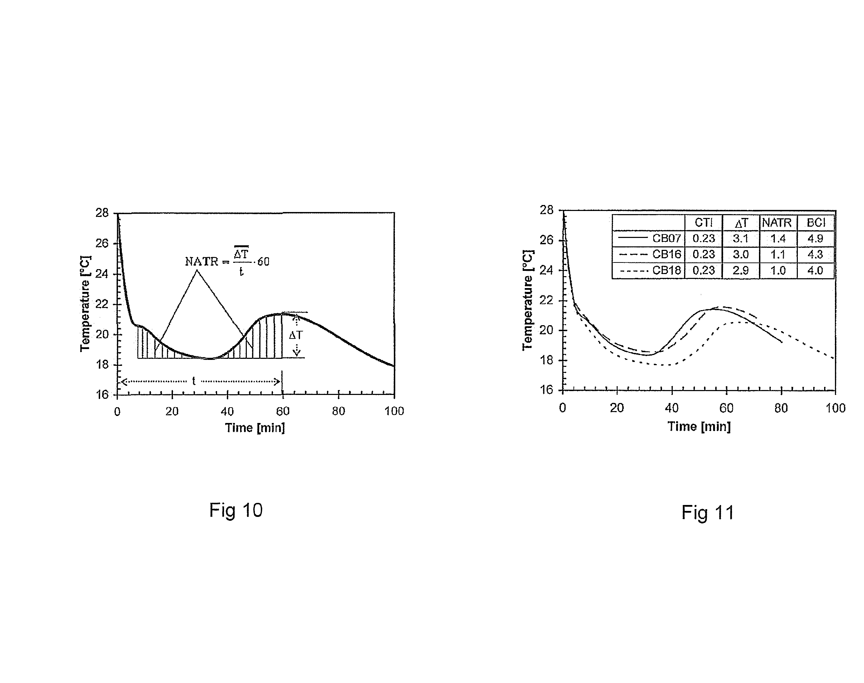

In Figur 10 ist eine Auswertung eines gemessenen Temperaturverlaufs einer Kakaobutter dargestellt. Unter anderem hat hier t die Bedeutung einer Zeit, $\Delta T$ bedeutet einen Temperaturanstieg und NATR den normalisierten mittleren Temperaturanstieg.

In Figur 11 ist die Messung des Temperaturverlaufs dreier unterschiedlicher Proben von Kakaobutter dargestellt. Gemäss der Auswertung wird die Probe CB07 als besser als die Proben CB16 und CB18 bewertet. Die Probe CB16 wird als besser als die Probe CB18 bewertet.

Auswertungsbeispiel:

Anhand der aufgezeichneten Kühlkurve wie in Figur 10 gezeigt werden folgende Messpunkte direkt ausgewertet:

- Erster Wendepunkt während der Keimbildungsphase (Temperatur: $T_N$, Zeit: $t_N$)
- Zweiter Wendepunkt während der Kristallwachstumsphase (Temperatur: $T_C$, Zeit: $t_C$)
- Minimale und maximale Temperatur ($T_{min}$, $T_{max}$)

Die aus der Kühlkurve für Kakaobutter wichtigen Kenngrössen sind auszuwerten:

1. Kristallwachstums-, Umwandlungsintensität (Crystal Transformation / growth Intensity: CTI)

$$CTI = \frac{dT}{dt}$$

Der zeitliche Temperaturanstieg [Steigung in °C/min] des zweiten Wendepunktes beschreibt die maximale Kristallwachstumsintensität während der Verfestigung.

2. Kristallisationsindex (Crystallisation Index: BCI)

a. Maximale Temperaturanstieg ($\Delta T$) während Kristallwachstum:

$$\Delta T = T_{max} - T_{min}$$

b. Normalisierter mittlerer Temperaturanstieg (<u>N</u>ormalised <u>A</u>verage <u>T</u>emperature <u>R</u>ise: NATR)

$$NATR = \frac{\overline{\Delta T}}{t} \cdot 60$$

$\overline{\Delta T}$: Mittlere Differenztemperatur von gemessen Messpunkten gegenüber Minimaltemperatur. Nur die Differenztemperatur im Bereich zwischen erstem Wendepunkt und der Maximaltemperatur wird berücksichtigt. t: Messzeit zwischen erstmaligem abkühlen auf 28°C der Probe und erreichen einer Maximaltemperatur nach der Kristallisation.

c. Kristallisationsindex (BCI)

$$BCI = y \cdot \Delta T + z \cdot NATR$$

y: Gewichtungsfaktor für $\Delta T$
z: Gewichtungsfaktor für NATR

$$BCI = y \cdot \Delta T + z \cdot \frac{\overline{\Delta T}}{t} \cdot 60$$

Der BCI-Wert gibt gesamthaft Auskunft über die freiwerdende Kristallisationswärme sowohl während der Keimbildungsphase als auch während der Kristallwachstumsphase. Die Stärke des Temperaturanstiegs und die dafür benötigte Zeit haben einen direkten Einfluss auf dem ermittelten BCI-Wert.

Kühlkurven von drei unterschiedlichen Kakaobutter-Proben sind in Figur 11 dargestellt. Der unterschiedliche Verlauf der Kühlkurven ist deutlich sichtbar. Die ausgewerteten CTI-Werte sind jedoch gleich. Die unterschiedlichen BCI-Werte repräsentieren daher deutlich besser den Verlauf der Kühlkurve als die CTI-Werte.

## Patentansprüche

1. Vorrichtung (1) zur Temperaturmessung, enthaltend einen Temperaturfühler, einen Aufnahmebehälter (5), insbesondere einen Einweg-Aufnahmebehälter, und zumindest eine Temperiervorrichtung (6), insbesondere eine Peltier-Temperiervorrichtung, mit einem Aufnahmebereich (9) für den Aufnahmebehälter (5), derart ausgebildet, dass bei bestimmungsgemässem Gebrauch des Aufnahmebehälters (5) die Wärmeübertragung zwischen Aufnahmebehälter (5) und Temperiervorrichtung (6) durch Wärmestrahlung und Wärmeleitung erzielbar ist, wobei der Wärmeleitungsanteil überwiegt und ein Kontakt zwischen Temperiervorrichtung (6) und einer Aussenwand (11) des Aufnahmebehälters (5) auf höchstens 80%, bevorzugt höchstens 50%, besonders bevorzugt höchstens 20% und ganz besonders bevorzugt höchstens 1% der Fläche der Aussenwand eingestellt ist und die Temperiervorrichtung (6) in einem Temperaturbereich regelbar ist.

2. Vorrichtung (1) gemäss Anspruch 1, wobei die dem Aufnahmebereich (9) zugewandte Aussenwand (11) des Aufnahmebehälters (5) bei bestimmungsgemässem Gebrauch von der Innenwand (12) des Aufnahmebereichs (9) beabstandbar, insbesondere beabstandet ist, und wobei die Vorrichtung (1) einen Temperaturfühlerhalter (3) aufweist, insbesondere zur Aufnahme eines Temperaturfühlers (2), wobei der Aufnahmebereich (9) mit einem Fluid (8), insbesondere im Wesentlichen unter Umgebungsdruck, befüllbar ist.

3. Vorrichtung (1) gemäss einem der Ansprüche 1 bis 2, **dadurch gekennzeichnet, dass** die regelbare Temperiervorrichtung (6) in einem Temperaturbereich von -20°C bis 40 °C, insbesondere von 1°C bis 20°C, regelbar ist.

4. Vorrichtung (1) gemäss einem der Ansprüche 1 bis 3, **dadurch gekennzeichnet, dass** der Temperaturfühlerhalter (3) und / oder eine Temperaturfühleraufnahme (18) thermostatisierbar, insbesondere aktiv thermostatisierbar, ist.

5. Vorrichtung (1) gemäss einem der Ansprüche 1 bis 4, **dadurch gekennzeichnet, dass** ein Abstand (d) zwischen Innenwand (12) des Aufnahmebereichs (9) und der Aussenwand (11) des Aufnahmebehälters (5) bei bestimmungsgemässem Gebrauch einstellbar ist.

6. Vorrichtung (1) gemäss einem der Ansprüche 1 bis 5, **dadurch gekennzeichnet, dass** die Aussenwand (11) des Aufnahmebehälters (5) zumindest teilweise eine rippenartige Struktur aufweist.

7. Vorrichtung (1) gemäss einem der Ansprüche 1 bis 6, **dadurch gekennzeichnet**, der Temperaturfühlerhalter (3) einen Wärmeleitungsbereich (16) mit einer ersten Wärmeleitung und einen Wärmedämmungsbereich (17) mit einer zweiten Wärmeleitung aufweist, wobei die erste Wärmeleitung grösser als die zweite Wärmeleitung ist.

8. Vorrichtung (1) gemäss einem der Ansprüche 1 bis 7, **dadurch gekennzeichnet, dass** ein Abstandshalter (4) in der Temperiervorrichtung (6) aufnehmbar ist zur Aufnahme des Aufnahmebehälters (5), insbesondere zur Einstellung des Abstandes zwischen Innenwand (12) des Aufnahmebereichs (9) und der Aussenwand (11) des Aufnahmebehälters (5).

9. Vorrichtung (1) gemäss einem der Ansprüche 1 bis 8, **dadurch gekennzeichnet, dass** der Abstandshalter (4) aus Metall, insbesondere Aluminium oder Stahl, Kunststoff oder einer beliebigen Kombination dieser Materialien besteht.

10. Vorrichtung (1) gemäss einem der Ansprüche 1 bis 9, **dadurch gekennzeichnet, dass** mit der Vorrichtung (1) ein Computer (13) verbindbar oder verbunden ist zur Steuerung der Vorrichtung (1) sowie zur Aufnahme der gemessenen Temperaturen.

11. Verfahren zur Temperaturmessung, mit einer Vorrichtung (1) gemäss einem der Ansprüche 1 bis 10, **gekennzeichnet durch** die folgenden Schritte:

   - Befüllen eines Aufnahmebehälters (5) der Vorrichtung (1) mit einer Masse (20);
   - Aufschmelzen der Masse (20) auf zumindest 50°C, bevorzugt auf zumindest 70°C;
   - Regeln der Temperatur in der Temperiervorrichtung (6) auf die für die Messung benötigte Temperatur, bevorzugt in einem Temperaturbereich von -20°C bis 40 °C, insbesondere bevorzugt von 1°C bis 20°C;
   - Einsetzen des Aufnahmebehälters (5) in den Aufnahmebereich (9);
   - Messen der Temperatur der Masse (20) in Abhängigkeit von der Zeit mittels des Temperaturfühlers (2);
- Speichern der gemessenen Temperatur, insbesondere der gemessenen Temperatur-Zeit Paare.

12. Verwendung einer Vorrichtung (1) gemäss einem der Ansprüche 1 bis 10, insbesondere zur Durchführung eines Verfahrens nach Anspruch 11, zur Bestimmung des Kristallisationsverhaltens einer Masse (20), insbesondere von Kakaobutter, einem pflanzlichen Fett oder Kakaomasse.

13. Verwendung einer Vorrichtung (1) gemäss Anspruch 12, **dadurch gekennzeichnet, dass** das Kristallisationsverhalten mittels eines Expertensystems (14) charakterisiert wird.

14. Computerprogrammprodukt, das direkt in den internen Speicher eines digitalen Computers geladen werden kann und Softwarecodeabschnitte umfasst, mit denen eine Vorrichtung gemäss einem der Ansprüche 1 bis 10 steuerbar ist, insbesondere zur Durchführung eines Verfahrens gemäss Anspruch 11, wenn das Produkt auf einem Computer läuft.

15. Verfahren nach Anspruch 11, wobei ein Abstandshalter (4), insbesondere eines Distanzring, in einer Vorrichtung (1) gemäss einem der Ansprüche 1 bis 10 zur Einstellung eines Abstandes zwischen einer Innenwand (12) einer Temperiervorrichtung (6) und einer Aussenwand (11) eines Aufnahmebehälters (5) bei bestimmungsgemässem Gebrauch des Aufnahmebehälters (5) verwendet wird.

**Claims**

1. Device (1) for temperature measurement, comprising a temperature sensor, a receiving container (5), in particular a disposable receiving container, and at least one temperature-control device (6), in particular a Peltier temperature-control device, with a receiving region (9) for the receiving container (5), formed in such a way that during use of the receiving container (5) as intended the heat transfer between the receiving container (5) and the temperature-control device (6) can be achieved by heat radiation and heat conduction, wherein the heat conduction component predominates and a contact between the temperature-control device (6) and an outer wall (11) of the receiving container (5) is set to at most 80%, preferably at most 50%, particularly preferably at most 20% and most particularly preferably at most 1% of the surface area of the outer wall, and the temperature-control device (6) can be controlled in a temperature range.

2. Device (1) according to Claim 1, wherein, during use as intended, the outer wall (11) of the receiving container (5) that is facing the receiving region (9) can be kept at a distance from the inner wall (12) of the receiving region (9), in particular is kept at a distance, and wherein the device (1) has a temperature sensor holder (3), in particular for receiving a temperature sensor (2), wherein the receiving region (9) can be filled with a fluid (8), in particular substantially under ambient pressure.

3. Device (1) according to either of Claims 1 and 2, **characterized in that** the controllable temperature-control device (6) can be controlled in a temperature range from -20°C to 40°C, in particular from 1°C to 20°C.

4. Device (1) according to one of Claims 1 to 3, **characterized in that** the temperature sensor holder (3) and/or a temperature sensor receptacle (18) can be thermostatically controlled, in particular can be actively thermostatically controlled.

5. Device (1) according to one of Claims 1 to 4, **characterized in that** a distance (d) between the inner wall (12) of the receiving region (9) and the outer wall (11) of the receiving container (5) can be set during use as intended.

6. Device (1) according to one of Claims 1 to 5, **characterized in that** the outer wall (11) of the receiving container (5) at least partially has a rib-like structure.

7. Device (1) according to one of Claims 1 to 6, **characterized in that** the temperature sensor holder (3) has a heat-conducting region (16) with a first heat conduction and a heat-insulating region (17) with a second heat conduction, wherein the first heat conduction is greater than the second heat conduction.

8. Device (1) according to one of Claims 1 to 7, **characterized in that** a spacer (4) can be received in the temperature-control device (6) for receiving the receiving container (5), in particular for setting the distance between the inner wall (12) of the receiving region (9) and the outer wall (11) of the receiving container (5).

9. Device (1) according to one of Claims 1 to 8, **characterized in that** the spacer (4) consists of metal, in particular aluminium or steel, plastic or any desired combination of these materials.

10. Device (1) according to one of Claims 1 to 9, **characterized in that** a computer (13) can be connected or is connected to the device (1), for controlling the device (1) and for recording the measured temperatures.

**11.** Method for temperature measurement, with a device (1) according to one of Claims 1 to 10, **characterized by** the following steps:

- filling a receiving container (5) of the device (1) with a compound (20);
- melting the compound (20) to at least 50°C, preferably to at least 70°C;
- controlling the temperature in the temperature-control device (6) to the temperature required for the measurement, preferably in a temperature range from -20°C to 40°C, particularly preferably from 1°C to 20°C;
- inserting the receiving container (5) into the receiving region (9);
- measuring the temperature of the compound (20) on a time-dependent basis by means of the temperature sensor (2);
- storing the measured temperature, in particular the measured temperature-time pairs.

**12.** Use of a device (1) according to one of Claims 1 to 10, in particular for carrying out a method according to Claim 11, for determining the crystallization behaviour of a compound (20), in particular of cocoa butter, a vegetable fat or cocoa mass.

**13.** Use of a device (1) according to Claim 12, **characterized in that** the crystallization behaviour is **characterized by** means of an expert system (14).

**14.** Computer program product that can be loaded directly into the internal memory of a digital computer and comprises software codings with which a device according to one of Claims 1 to 10 can be controlled, in particular for carrying out a method according to Claim 11 when the product is running on a computer.

**15.** Method according to Claim 11, wherein a spacer (4), in particular a distance ring, is used in a device (1) according to one of Claims 1 to 10 for setting a distance between an inner wall (12) of a temperature-control device (6) and an outer wall (11) of a receiving container (5) during use of the receiving container (5) as intended.

**Revendications**

**1.** Dispositif (1) de mesure de température, contenant un capteur de température, un récipient récepteur (5), notamment un récipient récepteur à usage unique et au moins un dispositif de tempérage (6), notamment un dispositif de tempérage Peltier, avec une zone réceptrice (9) pour le récipient récepteur (5) et réalisé de façon à ce qu'en cas d'utilisation fonctionnelle du récipient récepteur (5), la transmission de chaleur entre le récipient récepteur (5) et le dispositif de tempérage (6) peut être atteinte par rayonnement thermique et conduction thermique, la partie de conduction thermique étant majoritaire et un contact entre le dispositif de tempérage (6) et une paroi extérieure (11) du récipient récepteur (5) étant réglé à tout au plus 80 %, de façon préférée à tout au plus 50 %, de façon particulièrement préférée à tout au plus 20 % et de façon tout particulièrement préférée à tout au plus 1 % de la surface de paroi extérieure et le dispositif de tempérage (6) pouvant être réglé dans une plage de température.

**2.** Dispositif (1) selon la revendication 1, la paroi extérieure (11), orientée vers la zone réceptrice (9), du récipient récepteur (5) pouvant être écartée, notamment étant écartée, en cas d'utilisation fonctionnelle, de la paroi intérieure (12) de la zone réceptrice (9) et le dispositif (1) comportant un support de capteur de température (3), notamment pour recevoir un capteur de température (2), la zone réceptrice (9) pouvant être remplie avec un fluide (8), notamment pour l'essentiel à pression ambiante.

**3.** Dispositif (1) selon l'une quelconque des revendications 1 à 2, **caractérisé en ce que** le dispositif de tempérage (6) réglable peut être réglé dans une plage de température de -20°C à 40°C, notamment de 1°C à 20°C.

**4.** Dispositif (1) selon l'une quelconque des revendications 1 à 3, **caractérisé en ce que** le support de capteur de température (3) et/ou un logement de capteur de température (18) peut être thermostaté, notamment activement thermostaté.

**5.** Dispositif (1) selon l'une quelconque des revendications 1 à 4, **caractérisé en ce qu'**une distance (d) entre la paroi intérieure (12) de la zone réceptrice (9) et la paroi extérieure (11) du récipient récepteur (5) est réglable en cas d'utilisation fonctionnelle.

**6.** Dispositif (1) selon l'une quelconque des revendications 1 à 5, **caractérisé en ce que** la paroi extérieure (11) du récipient récepteur (5) comporte au moins en partie une structure de type nervurée.

**7.** Dispositif (1) selon l'une quelconque des revendications 1 à 6, **caractérisé en ce que** le support de capteur de température (3) comporte une zone de conduction thermique (16) avec une première conduction thermique et une zone de calorifugeage (17) avec une deuxième conduction thermique, la première conduction thermique étant supérieure à la deuxième conduction thermique.

**8.** Dispositif (1) selon l'une quelconque des revendications 1 à 7, **caractérisé en ce qu'**une entretoise (4) peut être reçue dans le dispositif de tempérage (6) pour recevoir le récipient récepteur (5), notamment pour régler la distance entre la paroi intérieure (12) de la zone réceptrice (9) et la paroi extérieure (11) du récipient récepteur (5).

9. Dispositif (1) selon l'une quelconque des revendications 1 à 8, **caractérisé en ce que** l'entretoise (4) est en métal, notamment en aluminium ou en acier, en matière plastique ou une combinaison quelconque de ces matériaux.

10. Dispositif (1) selon l'une quelconque des revendications 1 à 9, **caractérisé en ce qu'**un ordinateur (13) peut être relié ou est relié au dispositif (1) pour commander le dispositif (1) ainsi que pour recevoir les températures mesurées.

11. Procédé de mesure de température, avec un dispositif (1) selon l'une quelconque des revendications 1 à 10, **caractérisé par** les étapes suivantes :

    - remplissage d'un récipient récepteur (5) du dispositif (1) avec une masse (20) ;
    - fonte de la masse (20) à au moins 50 °C, de façon préférée à au moins 70 °C ;
    - réglage de la température dans le dispositif de tempérage (6) à la température nécessaire à la mesure, de façon préférée dans une plage de température de - 20 °C à 40 °C, notamment de façon préférée de 1 °C à 20°C ;
    - insertion du récipient récepteur (5) dans la zone réceptrice (9) ;
    - mesure de la température de la masse (20) en fonction du temps à l'aide du capteur de température (2) ;
    - mémorisation de la température mesurée, notamment des paires température-temps mesurées.

12. Utilisation d'un dispositif (1) selon l'une quelconque des revendications 1 à 10, notamment pour la mise en oeuvre d'un procédé selon la revendication 11, pour déterminer le comportement de cristallisation d'une masse (20), notamment de beurre de cacao, de matière grasse végétale ou de masse de cacao.

13. Utilisation d'un dispositif (1) selon la revendication 12, **caractérisée en ce que** le comportement de cristallisation est caractérisé à l'aide d'un système expert (14).

14. Produit de programme informatique, pouvant directement être chargé dans la mémoire interne d'un ordinateur numérique et comprenant des sections de code de logiciel avec lesquelles un dispositif selon l'une quelconque des revendications 1 à 10 peut être commandé, notamment pour la mise en oeuvre d'un procédé selon la revendication 11, lorsque le produit est lancé sur un ordinateur.

15. Procédé selon la revendication 11, support d'écartement (4), notamment une bague d'écartement, étant prévu dans un dispositif (1) selon l'une quelconque des revendications 1 à 10 pour régler une distance entre une paroi intérieure (12) d'un dispositif de tempérage (6) et une paroi extérieure (11) de récipient récepteur (5) en situation d'utilisation fonctionnelle du récipient récepteur (5).

Fig 1

Fig 2

Fig 3

Fig 4

Fig 5

Fig 6

Fig 7

Fig 8

EP 2 302 343 B1

Fig 9b

Fig 9d

Fig 9a

Fig 9c

Fig 11

Fig 10

21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4613514 A